# EUROPEAN PATENT APPLICATION

(11) **EP 4 850 578 A1**
(43) Date of publication of application: **09.12.2026**
(21) Application number: 26181563.3
(22) Date of filing: 28.05.2026
(51) Int. Cl.: A47J 31/44, A47J 31/46, A47J 31/52

(54) **BEVERAGE MACHINE AND CONTROL METHOD THEREOF**

(30) Priority: 30.05.2025 CN 202510726027
(71) Applicant: Kalerm Technology (Suzhou) Co., Ltd, Suzhou, Jiangsu 215134 (CN)
(72) Inventor: WANG, Hongming, Suzhou, Jiangsu, 215134 (CN); LU, Dean, Suzhou, Jiangsu, 215134 (CN); SI, Xiaoqing, Suzhou, Jiangsu, 215134 (CN)
(74) Representative: Winter, Brandl - Partnerschaft mbB

(57) **Abstract**

The present application discloses a beverage machine and a control method thereof. The beverage machine comprising: a mixing container having a raw milk inlet and a steam inlet; a milk supply pipeline connected to the raw milk inlet; a first temperature detection device configured to detect an initial temperature of raw milk; a heating device comprising a steam outlet; a steam supply pipeline assembly disposed between the steam outlet and the steam inlet and comprising a single steam supply pipeline or at least two steam supply pipelines; and a steam flow control assembly disposed on the steam supply pipeline assembly; wherein the steam flow control assembly is configured to, based on the initial temperature of the raw milk, control the steam supply pipeline assembly to supply steam to the mixing container at a target flow rate.

## Description

### TECHNICAL FIELD

The present application relates to the field of beverage preparation technology, and specifically relates to a beverage machine and a control method thereof.

### BACKGROUND

With an increasing demand for beverages such as coffee and milk tea, beverage machines have emerged.

In the related art, when using a beverage machine to prepare hot milk or hot milk foam, a temperature of the hot milk or hot milk foam at a liquid outlet is adjusted by regulating a flow of raw milk entering a mixing container. However, when a temperature of the raw milk is relatively low, in order to increase the temperature of the hot milk or hot milk foam, the flow of the raw milk is often significantly reduced, which inevitably affects a preparation efficiency of the hot milk or hot milk foam and is difficult to meet user needs.

### SUMMARY

The present application provides a beverage machine and a control method thereof. Various aspects and advantages of the present application will be set forth in the following description, or will be apparent from the description, or may be learned through implementation of the present application.

The invention is set out in the appended set of claims.

In an embodiment of the present application, by providing a first temperature detection device configured to detect an initial temperature of raw milk, providing a steam supply pipeline assembly that supplies steam to a mixing container, and disposing a steam flow control assembly on the steam supply pipeline assembly, the steam flow control assembly can, based on the initial temperature of the raw milk detected by the first temperature detection device, control one steam supply pipeline, or one of at least two steam supply pipelines, to supply steam to the mixing container at a target flow rate, so that a flow of steam entering the mixing container can match the initial temperature of the raw milk to heat the raw milk. This can not only achieve a purpose of regulating a temperature of a beverage output from the beverage machine, but also provides higher reliability in adjusting the temperature of the beverage, better meets user needs, and does not reduce a preparation efficiency of the beverage.

In an embodiment of the present application, by controlling one steam supply pipeline, or one of at least two steam supply pipelines, to supply steam to a mixing container at a target flow rate according to an initial temperature of raw milk, a flow of steam entering the mixing container can match the initial temperature of the raw milk to heat the raw milk. This can not only achieve a purpose of regulating a temperature of a beverage output from the beverage machine, but also provides higher reliability in adjusting the temperature of the beverage, better meets user needs, and does not reduce a preparation efficiency of the beverage.

### BRIEF DESCRIPTION OF THE DRAWINGS

Figure 1 is a schematic diagram of a pipeline connection of a beverage machine provided by some embodiments of the present application.
Figure 2 is a schematic diagram of an electrical connection of the beverage machine according to Figure 1.
Figure 3 is a schematic diagram of a pipeline connection of a beverage machine provided by other embodiments of the present application.
Figure 4 is a schematic diagram of a pipeline connection of a beverage machine provided by further embodiments of the present application.
Figure 5 is a schematic diagram of a pipeline connection of a beverage machine provided by still other embodiments of the present application.
Figure 6 is a schematic diagram of an electrical connection of the beverage machine according to Figure 5.
Figure 7 is a flowchart of a control method for a beverage machine provided by some embodiments of the present application.
Figure 8 is a flowchart of a control method for a beverage machine provided by other embodiments of the present application.
Figure 9 is a flowchart of a control method for a beverage machine provided by further embodiments of the present application.
Figure 10 is a flowchart of a control method for a beverage machine provided by still other embodiments of the present application.
Figure 11 is a flowchart of a control method for a beverage machine provided by yet other embodiments of the present application.
Figure 12 is a flowchart of a control method for a beverage machine provided by still further embodiments of the present application.

### DETAILED DESCRIPTION

The technical solutions in embodiments of the present application will be clearly and completely described below with reference to drawings in the embodiments of the present application. Obviously, the described embodiments are only some embodiments of the present application, not all embodiments.

In the present application, drawings are not necessarily drawn to scale, and local features may be enlarged or reduced to more clearly show details of the local features.

Unless otherwise specified, all technical and scientific terms used in the present application have same meanings as commonly understood by those skilled in a technical field of the present application. Terms used in the present application are only for a purpose of describing specific embodiments and are not intended to limit a scope of the present application. Singular forms "a", "an", and "the" used in the present application and appended claims are also intended to comprise plural forms unless a context clearly indicates otherwise.

In a description of the present application, it should be understood that terms "first" and "second" are only used for descriptive purposes and cannot be understood as indicating or implying relative importance or implicitly indicating a number of indicated technical features. Thus, a feature defined with "first" and "second" may explicitly or implicitly comprise one or more of the features. In the description of the present application, "multiple" means two or more, unless otherwise explicitly and specifically defined. In the description of the present application, "several" means one or more, unless otherwise explicitly and specifically defined.

In a description of the present application, orientations or positional relationships indicated by terms "center", "longitudinal", "transverse", "length", "width", "thickness", "height", "upper", "lower", "front", "rear", "left", "right", "vertical", "horizontal", "top", "bottom", "inner", "outer", "clockwise", "counterclockwise", etc. are based on orientations or positional relationships shown in drawings, and are only for convenience of a simplified description of the present application, and do not indicate that a referred device or element must have a specific orientation, or be constructed and operated in a specific orientation, and thus cannot be understood as limitations to the present application.

In a description of the present application, unless otherwise explicitly defined, terms "install", "connect", "connection", "fix", "set", etc. should be understood in a broad sense. For example, a "connection" may be a fixed connection, a detachable connection, or an integral connection; may be a mechanical connection or an electrical connection; may be a direct connection or an indirect connection through an intermediate medium, or may be an internal communication between two elements or an interaction relationship between two elements. For a person of ordinary skill in the art, specific meanings of the above terms in the present application can be understood according to a specific situation.

In a description of the present application, unless otherwise explicitly defined, a first feature being "on", "above", "over", "upon", "under", "below", "beneath", or "underneath" a second feature may mean that the first feature and the second feature are in direct contact, or that the first feature and the second feature are in indirect contact through an intermediate medium. Moreover, the first feature being "above", "over", and "upon" the second feature may mean that the first feature is directly above or obliquely above the second feature, or may simply indicate that a horizontal height of the first feature is higher than a horizontal height of the second feature. The first feature being "below", "beneath", and "underneath" the second feature may mean that the first feature is directly below or obliquely below the second feature, or may simply indicate that the horizontal height of the first feature is lower than the horizontal height of the second feature.

The beverage machine 100 provided by the present application will be described in detail below.

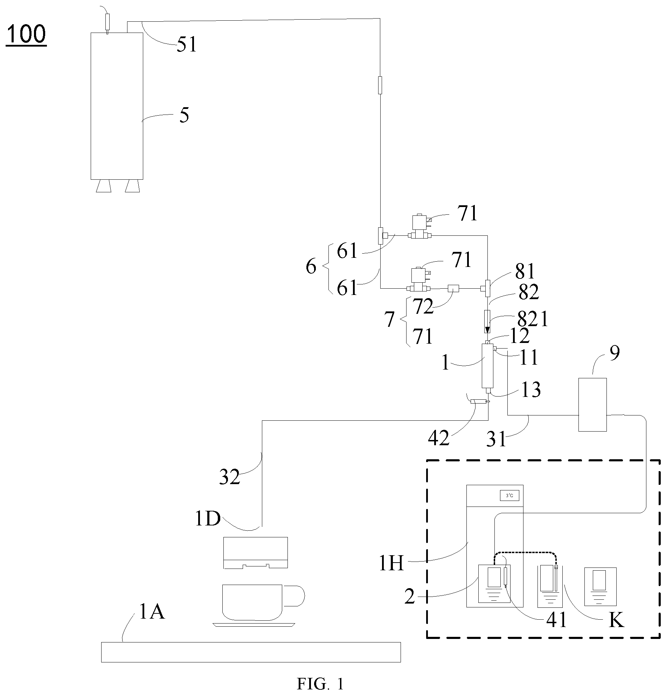

Referring to Figure 1, the present application provides a beverage machine 100. As an example, the beverage machine 100 may be a coffee machine.

The beverage machine 100 may have a beverage outlet 1D. A beverage prepared by the beverage machine 100 may be discharged from the beverage outlet 1D.

There may be one or multiple beverage outlets 1D.

Continuing to refer to Figure 1, the beverage machine 100 may comprise: a mixing container 1, a milk supply pipeline 31, a first temperature detection device 41, a heating device 5, a steam supply pipeline assembly 6, and a steam flow control assembly 7.

The mixing container 1 is configured to prepare a beverage.

The mixing container 1 comprises a raw milk inlet 11, a liquid outlet 13 and a steam inlet 12. The raw milk inlet 11 is configured to allow raw milk to enter the mixing container 1. The steam inlet 12 is configured to allow steam to enter the mixing container 1. The steam provides heat for the raw milk to form a hot beverage; for example, hot milk or hot milk foam. The liquid outlet 13 is configured to allow the beverage prepared by the mixing container 1 to flow out.

The milk supply pipeline 31 is configured to transport raw milk to the mixing container 1 to prepare a beverage. As an example, one end of the milk supply pipeline 31 is connected to the raw milk inlet 11. Another end of the milk supply pipeline 31 is connected to a milk source that provides the raw milk. The milk source comprises but is not limited to a milk box 2 disposed in the beverage machine 100, or bottled milk or bagged milk external to the beverage machine 100.

In some embodiments, the beverage machine 100 may further comprise a milk box 2 configured to store raw milk.

In some embodiments, the beverage machine 100 may further comprise a milk box 2 configured to store raw milk. An end of the milk supply pipeline 31 away from the raw milk inlet 11 is connected to the milk box 2. The raw milk in the milk box 2 may enter the milk supply pipeline 31, and then enter the mixing container 1 through the raw milk inlet 11, so as to prepare the beverage in the mixing container 1.

A number of the milk boxes 2 may be one or multiple.

In other embodiments, the beverage machine 100 may not comprise the milk box 2. In this case, an end of the milk supply pipeline 31 away from the raw milk inlet 11 is defined as an external end, and the external end may be external to the beverage machine 100, so that the external end of the milk supply pipeline 31 can be connected to directly purchased or packaged bottled milk or bagged milk.

Continuing to refer to Figure 1, the beverage machine 100 may further comprise a beverage supply pipe 32 disposed between the liquid outlet 13 and the beverage outlet 1D. The liquid outlet 13 may be connected to the beverage outlet 1D through the beverage supply pipe 32. In this way, after the beverage prepared by the mixing container 1 flows out from the liquid outlet 13, the beverage may flow to the beverage outlet 1D through the beverage supply pipe 32.

In other embodiments, the liquid outlet 13 may also directly serve as the beverage outlet 1D, and in this case, the beverage supply pipe 32 need not be provided.

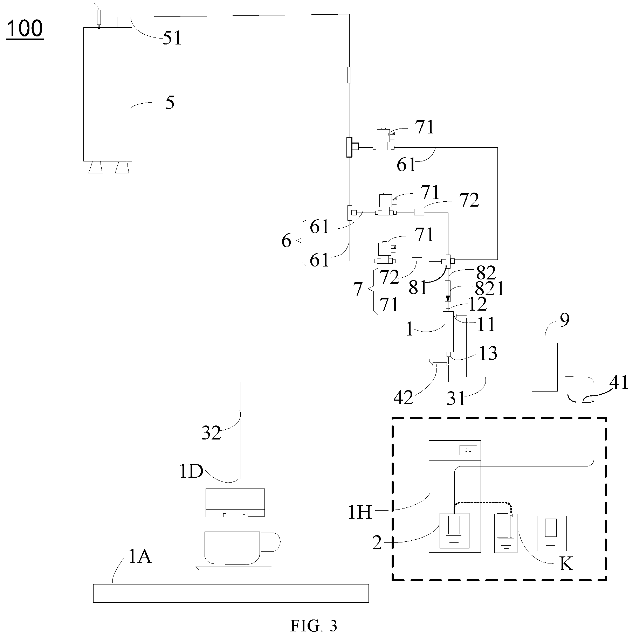

The first temperature detection device 41 is configured to detect an initial temperature of the raw milk. The first temperature detection device 41 is installed in the milk supply pipeline 31 to detect the initial temperature of the raw milk in the milk supply pipeline 31, as shown in Figure 3. As another example, the first temperature detection device 41 is installed in the milk box 2 to detect the initial temperature of the raw milk in the milk box 2, as shown in Figure 1. As an example, the first temperature detection device 41 may be a temperature sensor.

The heating device 5 is configured to heat a liquid to form steam. The liquid may be any liquid capable of forming steam to heat the raw milk. As an example, the liquid is water, and the heating device 5 is configured to heat water to form water steam.

As an example, the heating device 5 may be a steam boiler or a steam electric heating plate. The heating device 5 comprises a steam outlet 51.

The steam supply pipeline assembly 6 is configured to transport steam to the mixing container 1. As an example, the steam supply pipeline assembly 6 is connected between the steam outlet 51 and the steam inlet 12. In this way, after steam generated by the heating device 5 flows out from the steam outlet 51, the steam may flow to the mixing container 1 through the steam supply pipeline assembly 6, and the steam serves as a heating source for the raw milk and may heat the raw milk entering the mixing container 1 after entering the mixing container 1.

As an example, the steam supply pipeline assembly 6 comprises a single steam supply pipeline 61 or at least two steam supply pipelines 61. The steam supply pipelines 61 are connected between the steam outlet 51 and the steam inlet 12. When there are at least two steam supply pipelines 61, the at least two steam supply pipelines 61 are disposed in parallel between the steam outlet 51 and the steam inlet 12.

Continuing to refer to Figure 1, the steam flow control assembly 7 is disposed on the steam supply pipeline assembly 6; the steam flow control assembly 7 is configured to perform at least one of controlling opening or closing of the steam supply pipeline assembly 6 and adjusting a steam flow entering the mixing container 1. The steam flow control assembly 7 may only serve to control the opening or closing of the steam supply pipeline assembly 6. Alternatively, the steam flow control assembly 7 may also only serve to adjust the steam flow entering the mixing container 1. Alternatively, the steam flow control assembly 7 may both serve to control the opening or closing of the steam supply pipeline assembly 6 and serve to adjust the steam flow of the mixing container 1.

When the steam supply pipeline assembly 6 comprises the single steam supply pipeline 61, the steam flow control assembly 7 may, based on the initial temperature of the raw milk detected by the first temperature detection device 41, control the single steam supply pipeline 61 to supply steam to the mixing container 1 at a target flow rate.

For example, the steam flow control assembly 7, based on the initial temperature of the raw milk detected by the first temperature detection device 41, adjusts a flow rate of the single steam supply pipeline 61 to obtain a target flow rate that can match the initial temperature of the raw milk, so that the steam supply pipeline 61 supplies steam to the mixing container 1 at the target flow rate.

When the steam supply pipeline assembly 6 comprises at least two steam supply pipelines 61, the steam flow control assembly 7 may, based on the initial temperature of the raw milk detected by the first temperature detection device 41, control one of the at least two steam supply pipelines 61 to supply steam to the mixing container 1 at a target flow rate.

For example, different steam supply pipelines 61 may have different flow rates. The steam flow control assembly 7, based on the initial temperature of the raw milk detected by the first temperature detection device 41, controls a steam supply pipeline 61 that can match the initial temperature of the raw milk to supply steam to the mixing container 1. A flow rate of the steam supply pipeline 61 that matches the initial temperature of the raw milk is the target flow rate.

Specifically, in a hot beverage preparation, when the initial temperature of the raw milk is relatively low, based on this relatively low initial temperature, the single steam supply pipeline 61 is controlled to supply steam to the mixing container 1 at a relatively large target flow rate, or one of at least two steam supply pipelines 61 is controlled to supply steam to the mixing container 1 at a relatively large target flow rate, so that an amount of steam entering the mixing container 1 is large, and more steam is utilized to heat the raw milk entering the mixing container 1, so as to regulate a temperature of a beverage output from the beverage machine 100.

It can be understood that a relatively low initial temperature of the raw milk and a relatively high initial temperature of the raw milk are relative terms. As an example: when the initial temperature of the raw milk is a first temperature value, a flow rate of supplying steam to the mixing container 1 in this case is a first flow rate, and when the initial temperature of the raw milk is a second temperature value higher than the first temperature value, a flow rate of supplying steam to the mixing container 1 in this case is a second flow rate lower than the first flow rate.

When the initial temperature of the raw milk is relatively high, based on this relatively high initial temperature, the single steam supply pipeline 61 is controlled to supply steam to the mixing container 1 at a smaller target flow rate, or one of at least two steam supply pipelines 61 is controlled to supply steam to the mixing container 1 at a smaller target flow rate, so that an amount of steam entering the mixing container 1 is smaller, and less steam is utilized to heat the raw milk entering the mixing container 1, so as to regulate the temperature of the beverage output from the beverage machine 100.

An arrangement of the steam flow control assembly 7 can achieve a precise control of the steam flow. Since the flow rate of the steam supply pipeline assembly 6 can be flexibly adjusted according to the initial temperature of the raw milk, a steam supply amount can more accurately match heating requirements of the raw milk. This not only helps to avoid a waste of steam and improve an energy utilization efficiency, but also can further ensure an accuracy and a stability of a beverage temperature.

Through the above description, in an embodiment of the present application, by providing a first temperature detection device 41 configured to detect an initial temperature of raw milk, providing a steam supply pipeline assembly 6 that supplies steam to the mixing container 1, and disposing a steam flow control assembly 7 on the steam supply pipeline assembly 6, the steam flow control assembly 7 can, based on the initial temperature of the raw milk detected by the first temperature detection device 41, control the single steam supply pipeline 61 to supply steam to the mixing container 1 at a target flow rate, or control one of at least two steam supply pipelines 61 to supply steam to the mixing container 1 at a target flow rate. The present application can enable the flow of steam entering the mixing container 1 to match the initial temperature of the raw milk to heat the raw milk, which can not only achieve a purpose of regulating a temperature of a beverage output from the beverage machine 100, but also provides higher reliability in adjusting the temperature of the beverage, better meets user needs, and does not reduce a preparation efficiency of the beverage.

The beverage machine 100 of the present application achieves an automated management of a raw milk heating process. As an example, a user only needs to pour raw milk into the mixing container 1, and the beverage machine 100 can automatically detect the initial temperature of the raw milk and adjust a steam supply amount according to this initial temperature, thereby completing heating and preparation of a beverage. This process not only simplifies an operation procedure and improves a user convenience, but also ensures a stability and a consistency of a beverage taste.

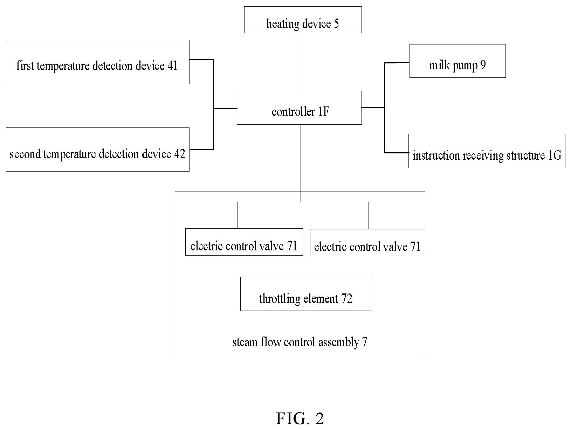

In some embodiments of the present application, referring to Figure 2, the beverage machine 100 may comprise a controller 1F. The controller 1F is electrically connected to the steam flow control assembly 7 and the first temperature detection device 41 respectively. The controller 1F controls the steam flow control assembly 7 according to a detection result of the first temperature detection device 41 (i.e., the initial temperature of the raw milk). In this way, the initial temperature of the raw milk detected by the first temperature detection device 41 can be utilized to timely regulate the steam flow control assembly 7, so as to timely adjust the steam flow entering the mixing container 1, making the beverage machine more intelligent.

As an example, the controller 1F may integrate a memory and a processor. The memory may store program instructions for controlling the beverage machine 100, and the processor is configured to execute the program instructions to control the beverage machine 100 to perform corresponding functions. For example, the program instructions comprise multiple first temperature ranges. Different first temperature ranges correspond to different flow rates of the steam supply pipeline assembly 6. According to a current initial temperature of the raw milk detected by the first temperature detection device 41, a first temperature range in which the initial temperature is located is determined, and this first temperature range is a first target temperature range, and a flow rate of the steam supply pipeline assembly 6 corresponding to the first target temperature range is a target flow rate. In this embodiment, the target flow rate is a flow rate prestored in the beverage machine based on different flow rates corresponding to different first temperature ranges. Temperature values of different first temperature ranges are adapted to beverage categories prepared by the beverage machine.

In some embodiments of the present application, continuing to refer to Figure 2, the beverage machine 100 further comprises an instruction receiving structure 1G. The instruction receiving structure 1G is configured to receive a preparation instruction for a beverage preparation. The controller 1F is also electrically connected to the instruction receiving structure 1G.

Specifically, the preparation instruction for the beverage preparation may comprise a hot beverage preparation instruction and a cold beverage preparation instruction. The instruction receiving structure 1G may receive the preparation instruction input by a user and feed back this information to the controller 1F. When the controller 1F receives the hot beverage preparation instruction, the controller 1F may, according to received initial temperature information of the raw milk, control the steam flow control assembly 7 to supply steam to the mixing container 1 at a target flow rate. In this way, it is advantageous to regulate the temperature of the beverage output from the beverage machine 100 according to actual user needs, meet actual user requirements, and make the beverage machine 100 more intelligent.

As an example, the cold beverage may be a beverage with a relatively low temperature in a temperature range of 0°C to 20°C, which may be a room temperature beverage not heated by a heating source, or may be a beverage cooled by a cooling medium. The hot beverage may be a beverage with a relatively high temperature in a temperature range of 40°C to 90°C, which may be a beverage whose temperature is increased by a heating source.

As an example, the instruction receiving structure 1G may be multiple keys (not shown). For example, the keys may comprise a hot beverage preparation key and a cold beverage preparation key. A user may select to trigger a corresponding key according to their own beverage consumption habits.

As an example, the instruction receiving structure 1G may be a user interface such as a touch screen. The user may apply a touch operation to the touch screen to input the preparation instruction to the touch screen.

It can be understood that in other embodiments, the beverage machine 100 may not comprise the instruction receiving structure 1G. As an example, the beverage machine 100 can wirelessly interact with a mobile terminal device of a user (for example, a mobile phone or a tablet computer). The user may input a corresponding preparation instruction in the mobile terminal device, and the controller 1F may receive the preparation instruction input by the user in the mobile terminal device.

In some embodiments of the present application, continuing to refer to Figure 1, the steam supply pipeline assembly 6 comprises N steam supply pipelines 61 in parallel. N is an integer greater than or equal to 2. The N steam supply pipelines 61 in parallel are disposed between the steam outlet 51 and the steam inlet 12.

The steam flow control assembly 7 comprises N electric control valves 71 and at least one throttling element 72. The N electric control valves 71 correspond to the N steam supply pipelines 61 one-to-one, and each of the N steam supply pipelines 61 is provided with one of the N electric control valves 71. The electric control valve 71 is configured to control opening or closing of a corresponding steam supply pipeline 61. At least one of the N steam supply pipelines 61 is provided with a throttling element 72. The throttling element 72 can throttle a fluid flowing through the throttling element.

It can be understood that when a steam supply pipeline 61 is not provided with a throttling element 72, an aperture size of the steam supply pipeline 61 itself determines a flow rate of the steam supply pipeline 61. When the steam supply pipeline 61 is provided with a throttling element 72, an aperture size of the throttling element 72 determines the flow rate of the steam supply pipeline 61. It can be understood that a flow rate of the throttling element 72 is the flow rate of the steam supply pipeline 61 where the throttling element 72 is located.

In some implementations, the throttling element 72 is an adjustable throttling element, and an aperture size thereof can be adjusted according to needs. In this way, a user can adjust the aperture size of the throttling element 72 according to different beverage preparation requirements, thereby achieving a more precise control of a steam flow.

The controller 1F is electrically connected to the N electric control valves 71. The controller 1F controls opening and closing of the N electric control valves 71 according to the initial temperature of the raw milk.

The controller 1F precisely controls the opening and closing of the N electric control valves 71 according to received initial temperature information of the raw milk. For example, when the initial temperature of the raw milk is relatively low, the controller 1F may control an electric control valve 71 on a steam supply pipeline 61 that can provide more steam flow to open, while controlling other electric control valves 71 to be in a closed state, so as to increase the steam flow entering the mixing container 1. Conversely, when the initial temperature of the raw milk is relatively high, the controller 1F may control an electric control valve 71 on a steam supply pipeline 61 that can provide less steam flow to open, while controlling other electric control valves 71 to be in a closed state, so as to reduce the steam flow entering the mixing container 1.

In this way, by providing a throttling element 72 on at least one steam supply pipeline 61, different steam supply pipelines 61 can achieve different flow rates. Through the controller 1F controlling the opening and closing of different electric control valves 71, opening or closing of different steam supply pipelines 61 can be separately controlled, so that the steam flow entering the mixing container 1 can be adjusted according to the initial temperature of the raw milk, providing higher reliability in adjusting a beverage temperature, better meeting user needs, and not reducing a beverage preparation efficiency. In addition, a structure of the above beverage machine 100 makes a connection between pipelines simple, facilitating processing and manufacturing of the beverage machine 100.

As an example, the electric control valve 71 may be a solenoid valve. Thus, a cost is low.

In some specific examples, continuing to refer to Figure 1, a number of throttling elements 72 is M, wherein M=N-1. The number of throttling elements 72 is one less than a number of steam supply pipelines 61. The controller 1F, according to the initial temperature of the raw milk, controls one of the N electric control valves 71 to open, and remaining ones of the N electric control valves 71 to close. In this example, a flow rate of the throttling element 72 may be fixed or adjustable.

For example, in a specific example shown in Figure 1, there are two steam supply pipelines 61 and one throttling element 72, i.e., N is 2 and M is 1. The throttling element 72 is disposed on one of the two steam supply pipelines 61, and another steam supply pipeline 61 is not provided with a throttling element 72. In this way, an arrangement of the throttling element 72 can make steam flow rates of the two steam supply pipelines 61 different. As an example, a steam flow rate of a steam supply pipeline 61 provided with the throttling element 72 is smaller than a steam flow rate of a steam supply pipeline 61 not provided with the throttling element 72, so that the controller 1F can, according to the initial temperature of the raw milk, control an electric control valve 71 on a steam supply pipeline 61 corresponding to the initial temperature of the raw milk to open, and other electric control valves 71 to close, so that the steam supply pipeline 61 corresponding to the initial temperature of the raw milk is conducted to adjust the steam flow entering the mixing container 1, i.e., to supply steam to the mixing container 1 at a target flow rate corresponding to and matching the initial temperature of the raw milk, providing higher reliability in adjusting the beverage temperature, better meeting user needs, not reducing the beverage preparation efficiency, and making the beverage machine 100 more intelligent.

As another example, there are three or more steam supply pipelines 61, and there are two or more throttling elements 72, N is greater than 2 and M is greater than 1. For example, N is 4, 5, 6 or 7, etc. The M throttling elements 72 are respectively disposed on M of the N steam supply pipelines 61. The throttling elements 72 on different steam supply pipelines 61 have different flow rates. Among the N steam supply pipelines 61, one steam supply pipeline 61 is not provided with a throttling element 72, and remaining M steam supply pipelines 61 correspond to the M throttling elements 72 one-to-one, with each throttling element 72 disposed on a corresponding steam supply pipeline 61 and configured to throttle and reduce a pressure of the corresponding steam supply pipeline 61. Different throttling elements 72 have different flow rates.

Referring to Figure 3, there are three steam supply pipelines 61 and two throttling elements 72, i.e., N is 3 and M is 2. The two throttling elements 72 are respectively disposed on two of the three steam supply pipelines 61, and another steam supply pipeline 61 is not provided with a throttling element 72.

In this way, one steam supply pipeline 61 not provided with a throttling element 72 has a different steam flow rate from remaining M steam supply pipelines 61 provided with throttling elements 72. As an example, a steam flow rate of a steam supply pipeline 61 provided with a throttling element 72 is smaller than a flow rate of a steam supply pipeline 61 not provided with a throttling element 72. An arrangement of the M throttling elements 72 can also make steam flow rates of the M steam supply pipelines 61 different. Thus, the controller 1F can, according to the initial temperature of the raw milk, control an electric control valve 71 on a steam supply pipeline 61 corresponding to the initial temperature of the raw milk to open and other electric control valves 71 to close, so that the steam supply pipeline 61 corresponding to the initial temperature of the raw milk is conducted to adjust the steam flow entering the mixing container 1, providing higher reliability in adjusting the beverage temperature, better meeting user needs, not reducing the beverage preparation efficiency, and making the beverage machine 100 more intelligent.

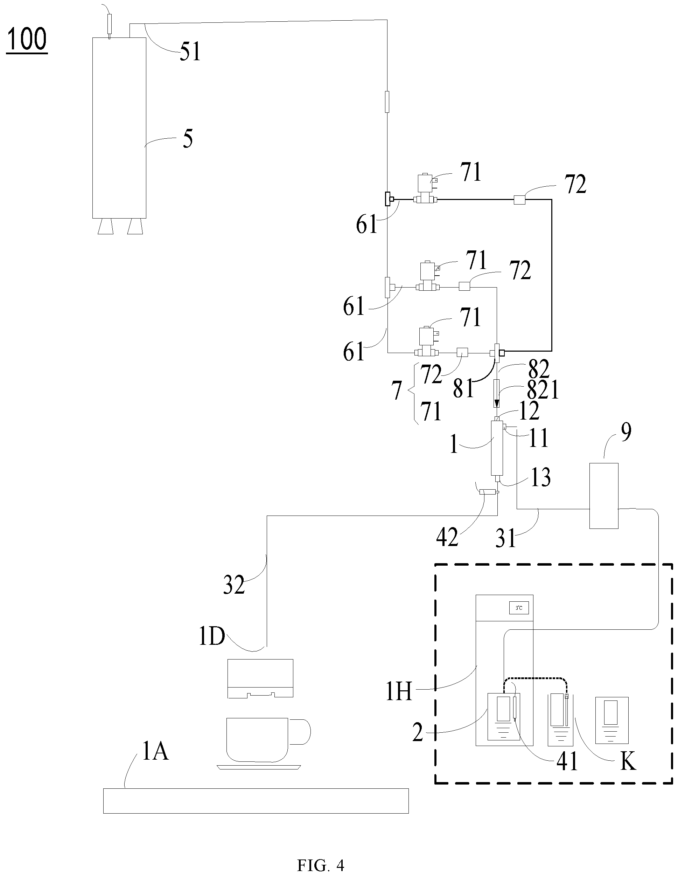

In other specific examples, referring to Figure 4, a number of throttling elements 72 is N. For example, N is 3, 4, 5, or 6, etc. That is, the number of throttling elements 72 is same as a number of steam supply pipelines 61. Each steam supply pipeline 61 is provided with a throttling element 72. Different throttling elements 72 have different flow rates. In this example, a flow rate of the throttling element 72 may be fixed or adjustable, as long as different throttling elements 72 have different flow rates. The controller 1F, according to the initial temperature of the raw milk, controls one of the N electric control valves 71 to open, and remaining ones of the N electric control valves 71 to close.

In this way, an arrangement of the throttling elements 72 can make different steam supply pipelines 61 have different steam flow rates, so that the controller 1F can, according to the initial temperature of the raw milk, control an electric control valve 71 on a steam supply pipeline 61 corresponding to the initial temperature of the raw milk to open, so that the steam supply pipeline 61 corresponding to the initial temperature of the raw milk is conducted to adjust the steam flow entering the mixing container 1, providing higher reliability in adjusting the beverage temperature, better meeting user needs, not reducing the beverage preparation efficiency, and making the beverage machine 100 more intelligent.

In some embodiments of the present application, continuing to refer to Figures 1, 3 and 4, there is a single steam inlet 12. The N steam supply pipelines 61 all communicate with the mixing container 1 through the steam inlet 12. On one hand, a structure of the mixing container 1 can be simplified and manufacturing and processing costs can be reduced, and on another hand, a sealing of the mixing container 1 can be ensured, avoiding a problem of a reduced sealing of the mixing container 1 caused by providing too many steam inlets 12.

In some embodiments of the present application, continuing to refer to Figures 1, 3 and 4, the beverage machine 100 further comprises: a multi-way fitting 81 and a common pipeline 82. One end of the common pipeline 82 is connected to the steam inlet 12. Another end of the common pipeline 82 is respectively connected to the N steam supply pipelines 61 through the multi-way fitting 81. In this way, the N steam supply pipelines 61 can be connected to the mixing container 1 through the multi-way fitting 81 and the common pipeline 82, thereby simplifying pipeline connections in the beverage machine 100 and improving a structural compactness and an assembly efficiency.

A number of communication ports of the multi-way fitting 81 is N+1. One communication port is connected to the common pipeline 82, and N communication ports are respectively connected to the N steam supply pipelines 61.

As an example, referring to Figure 1, there are two steam supply pipelines 61, and the multi-way fitting 81 is a three-way fitting. For example, the three-way fitting is a three-way pipe.

As another example, referring to Figures 3 and 4, there are three steam supply pipelines 61, and the multi-way fitting 81 is a four-way fitting. For example, the four-way fitting is a four-way pipe.

Based on the above embodiments, as an example, continuing to refer to Figures 1, 3 and 4, the beverage machine 100 further comprises: a check valve 821. The check valve 821 is disposed on the common pipeline 82. The check valve 821 allows unidirectional conduction from the multi-way fitting 81 to the steam inlet 12. In this way, the check valve 821 can only allow steam to flow from the multi-way fitting 81 to the mixing container 1, which is beneficial to improving a reliability of a steam supply from the steam supply pipeline 61 to the mixing container 1.

The check valve 821 can also effectively prevent the raw milk from flowing back into the steam supply pipeline 61 under circumstances such as pressure changes, thereby preventing contamination of the steam supply pipeline assembly 6 and the steam flow control assembly 7, or even an entire steam system of the beverage machine 100, avoiding potential hygiene problems.

An arrangement of the check valve 821 ensures a unidirectional nature of the steam flow, both ensuring an efficiency of a steam supply and maintaining a hygiene and a safety of the beverage machine 100. In addition, the check valve 821 has a simple structure, is easy to install and maintain, and further reduces an overall maintenance cost of the beverage machine 100.

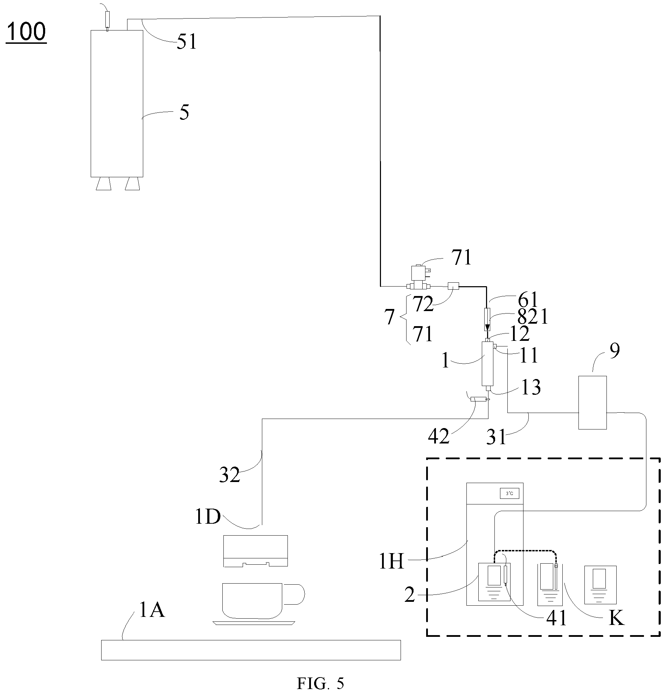

In some embodiments of the present application, referring to Figure 5, the steam supply pipeline assembly 6 is the single steam supply pipeline 61. The steam flow control assembly 7 comprises a throttling element 72 disposed on the steam supply pipeline 61 and an electric control valve 71 disposed on the steam supply pipeline 61. The throttling element 72 is configured to have an adjustable flow rate. As an example, a flow rate of the throttling element 72 may be adjustable within a range greater than or equal to 0 and less than or equal to 100%, and the flow rate of the throttling element 72 may also be adjustable within a range greater than 0 and less than 100%. The present application does not make specific limitations on this.

In other embodiments of the present application (not shown), the steam supply pipeline assembly 6 is the single steam supply pipeline 61, and the steam supply pipeline 61 is disposed between the steam outlet 51 and the steam inlet 12; the steam flow control assembly 7 comprises an electric control valve 71 disposed on the steam supply pipeline 61; the steam supply pipeline 61 is further provided with a check valve 821, the check valve 821 is disposed downstream of the electric control valve 71, and the check valve 821 allows unidirectional conduction from the steam outlet 51 to the steam inlet 12; a controller is electrically connected to the electric control valve 71, and the controller is configured to control opening or closing of the electric control valve 71. To simplify a structure and a control logic, the throttling element 72 may be omitted, and an electric control valve 71 and a check valve 821 may be provided on the steam supply pipeline 61 to achieve opening or closing control and unidirectional conduction of the steam supply pipeline 61. After acquiring an initial temperature of raw milk, regardless of a level of the initial temperature of the raw milk, the electric control valve 71 is controlled to open to provide steam to the mixing container 1, and the steam serves as a heat source to heat the raw milk, achieving a hot beverage preparation.

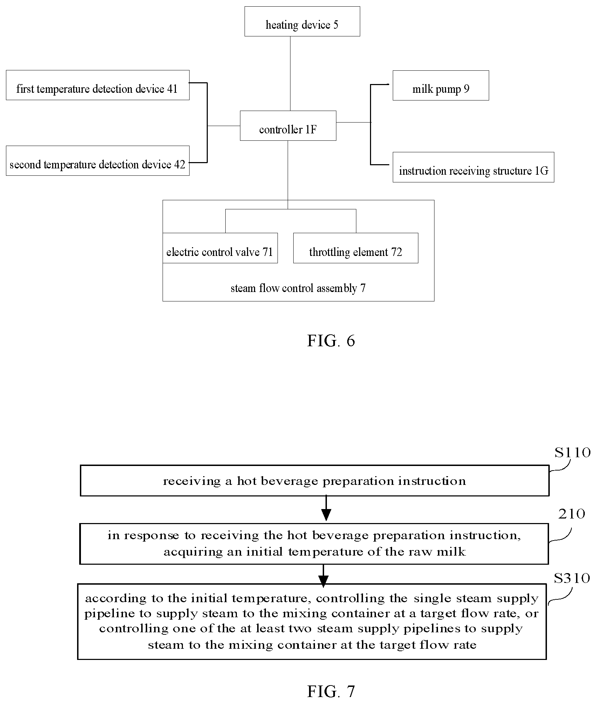

Referring to Figure 6, the controller 1F is electrically connected to both the throttling element 72 and the electric control valve 71. The controller 1F controls opening or closing of the electric control valve 71 according to the initial temperature of the raw milk, and the controller 1F adjusts a flow rate of the throttling element 72 according to the initial temperature of the raw milk. In this way, an arrangement of the throttling element 72 with an adjustable flow rate can enable the controller 1F to, according to the initial temperature of the raw milk, control the throttling element 72 to open to a target flow rate corresponding to the initial temperature of the raw milk, thereby adjusting the steam flow entering the mixing container 1 according to the initial temperature of the raw milk, providing higher reliability in adjusting the beverage temperature, better meeting user needs, not reducing the beverage preparation efficiency, and making the beverage machine 100 more intelligent. Moreover, when the flow rate of the throttling element 72 is adjustable within a range greater than or equal to 0 and less than or equal to 100%, a dual action of the throttling element 72 and the electric control valve 71 can be utilized to cut off the steam supply pipeline 61, which is beneficial to reliably avoiding steam entering the mixing container 1 when steam is not needed to heat milk.

Of course, it can be understood that in other embodiments, for a scheme where a flow rate of the throttling element 72 can be adjusted within a range greater than or equal to 0 and less than or equal to 100%, an electric control valve 71 may not be provided in the steam supply pipeline 61, but the throttling element 72 itself may be utilized to cut off the steam supply pipeline 61 when adjusted to a flow rate of 0.

In this embodiment, the throttling element 72 not only serves to adjust a steam flow, but also has a cutoff function of an electric control valve 71. When it is necessary to stop providing steam to the mixing container 1, the steam supply pipeline 61 can be cut off by simply adjusting a flow rate of the throttling element 72 to 0, simplifying a system structure and reducing manufacturing costs. At the same time, since the flow rate of the throttling element 72 can be continuously adjusted within a range of 0 to 100%, a precise control of the steam flow can be achieved, thereby further improving an adjustment accuracy and an intelligence level of a beverage temperature. This design makes the beverage machine 100 more flexible and easy to maintain while maintaining a high performance.

In some embodiments of the present application, to facilitate driving of milk and air, continuing to refer to Figures 1, 3, 4 and 5, the beverage machine 100 may comprise a milk pump 9. The milk pump 9 is disposed on the milk supply pipeline 31. In this way, when the milk pump 9 is working, milk in the milk supply pipeline 31 can be extracted to the mixing container 1.

As an example, the milk pump 9 comprises but is not limited to a unidirectional pump or a bidirectional pump.

Continuing to refer to Figures 2 and 6, the controller 1F may be electrically connected to the milk pump 9. In this way, when the beverage machine 100 needs to be used to prepare a beverage, the controller 1F can control the milk pump 9 to open, and after a beverage preparation is completed, the controller 1F can control the milk pump 9 to close, making the beverage machine 100 more intelligent.

In some embodiments of the present application, continuing to refer to Figures 1, 3, 4 and 5, the beverage machine 100 further comprises a second temperature detection device 42. The second temperature detection device 42 is disposed at least one of at the liquid outlet 13 and on a pipeline downstream of the liquid outlet 13 (for example, the above-mentioned beverage supply pipe 32). The second temperature detection device 42 is configured to detect an actual temperature of a beverage output from the mixing container 1.

Referring to Figures 2 and 6, the controller 1F is also electrically connected to the second temperature detection device 42. The controller 1F adjusts a rotation speed of the milk pump 9 according to a detection result of the second temperature detection device 42.

Specifically, when the second temperature detection device 42 detects that a temperature of a beverage flowing out from the liquid outlet 13 is relatively high and differs from user requirements, the controller 1F can control a rotation speed of the milk pump 9 to increase, thereby increasing a milk flow entering the mixing container 1, so as to timely reduce the temperature of the beverage flowing out from the liquid outlet 13. Conversely, when the second temperature detection device 42 detects that the temperature of the beverage flowing out from the liquid outlet 13 is relatively low and differs from user requirements, the controller 1F can control the rotation speed of the milk pump 9 to decrease, thereby decreasing the milk flow entering the mixing container 1, so as to timely increase the temperature of the beverage flowing out from the liquid outlet 13. In this way, the rotation speed of the milk pump 9 can be adjusted based on the temperature of the beverage flowing out from the liquid outlet 13, and this adjustment method can be used in combination with the above-mentioned adjustment method of adjusting a flow rate of the steam supply pipeline assembly 6 based on the initial temperature of the raw milk, which is more beneficial to preparing a beverage with a temperature that meets user needs, with a relatively high preparation efficiency.

In some embodiments of the present application, referring to Figures 2 and 6, the controller 1F is also electrically connected to the heating device 5. A heating power of the heating device 5 is adjustable. The controller 1F adjusts the heating power of the heating device 5 according to the initial temperature of the raw milk. Specifically, when the initial temperature of the raw milk is relatively low, the controller 1F can control the heating power of the heating device 5 to increase, so as to increase a temperature of steam entering the mixing container 1 and improve a heating efficiency of the steam on milk. Conversely, when the initial temperature of the raw milk is relatively high, the controller 1F can control the heating power of the heating device 5 to decrease, so as to reduce the temperature of the steam entering the mixing container 1, reduce a power consumption of the heating device 5, and save electrical energy.

Furthermore, a process of the controller 1F adjusting the heating power of the heating device 5 may be a dynamic and precise process. The process relies on an accurate detection of the initial temperature of the raw milk and a preset algorithm logic inside the controller 1F. This algorithm logic can quickly calculate a most appropriate heating power according to the initial temperature of the raw milk, thereby ensuring that the steam temperature can meet needs of heating milk without causing an energy waste due to overheating.

In some embodiments of the present application, to facilitate a storage of milk, continuing to refer to Figures 1, 3, 4 and 5, the beverage machine 100 may comprise a refrigerator 1H. When the beverage machine 100 comprises a milk box 2, the refrigerator 1H may be configured to accommodate the above-mentioned milk box 2. In this way, it is beneficial to achieve a refrigeration of milk by the beverage machine 100 and extend a freshness date of the milk.

In other embodiments, the beverage machine 100 may not be provided with a refrigerator 1H, and a refrigerator 1H independent of the beverage machine 100 may be utilized to refrigerate the milk box 2, or the milk box 2 may not be refrigerated.

In some embodiments of the present application, continuing to refer to Figures 1, 3, 4 and 5, the beverage machine 100 comprises a waste water tray 1A. The waste water tray 1A is located directly below the beverage outlet 1D. In this way, when a container for receiving a beverage is too small and the beverage overflows from the container, an overflowing beverage can be received by the waste water tray 1A, thereby facilitating a cleanup of the overflowing beverage.

A control method for the beverage machine 100 of the present application will be described below. This control method is applied to the beverage machine 100 in any of the technical solutions described above.

Referring to Figure 7, a control method for a beverage machine 100 provided by the present application comprises following steps:
S110: Receiving a hot beverage preparation instruction.

For example, a beverage machine 100 may comprise an instruction receiving structure 1G, and the beverage machine 100 may utilize the instruction receiving structure 1G to receive a hot beverage preparation instruction. As another example, the beverage machine 100 may also directly receive a hot beverage preparation instruction from a mobile terminal device of a user.

S210: In response to receiving the hot beverage preparation instruction, acquiring an initial temperature of raw milk.

For example, after a beverage machine 100 receives a hot beverage preparation instruction, a first temperature detection device 41 detects an initial temperature of raw milk and feeds back to a controller 1F, and the controller 1F may receive the initial temperature of the raw milk fed back by the first temperature detection device 41. In this step, as an example, acquiring the initial temperature of the raw milk may refer to the first temperature detection device 41 detecting the initial temperature of the raw milk. As another example, acquiring the initial temperature of the raw milk may also refer to the controller 1F acquiring the initial temperature of the raw milk fed back by the first temperature detection device 41 to the controller 1F.

S310: According to the initial temperature, controlling the single steam supply pipeline 61 to supply steam to a mixing container 1 at a target flow rate, or controlling one of at least two steam supply pipelines 61 to supply steam to the mixing container 1 at a target flow rate, thereby regulating a temperature of a beverage output from the beverage machine 100.

Specifically, when an initial temperature of raw milk is relatively low, based on this relatively low initial temperature, the single steam supply pipeline 61 is controlled to supply steam to a mixing container 1 at a relatively large target flow rate, or one of at least two steam supply pipelines 61 is controlled to supply steam to the mixing container 1 at a relatively large target flow rate, so that an amount of steam entering the mixing container 1 is large, and more steam is utilized to heat raw milk entering the mixing container 1, so as to regulate a temperature of a beverage output from the beverage machine 100. When the initial temperature of the raw milk is relatively high, based on this relatively high initial temperature, the single steam supply pipeline 61 is controlled to supply steam to the mixing container 1 at a smaller target flow rate, or one of at least two steam supply pipelines 61 is controlled to supply steam to the mixing container 1 at a smaller target flow rate, so that the amount of steam entering the mixing container 1 is smaller, and less steam is utilized to heat the raw milk entering the mixing container 1, so as to regulate the temperature of the beverage output from the beverage machine 100.

In an embodiment of the present application, by controlling the single steam supply pipeline 61 to supply steam to a mixing container 1 at a target flow rate, or controlling one of at least two steam supply pipelines 61 to supply steam to the mixing container 1 at a target flow rate according to an initial temperature of raw milk, a flow of steam entering the mixing container 1 can match the initial temperature of the raw milk to heat the raw milk. This can not only achieve a purpose of regulating a temperature of a beverage output from the beverage machine 100, but also provides higher reliability in adjusting the temperature of the beverage, better meets user needs, and does not reduce a preparation efficiency of the beverage.

In some embodiments of the present application, referring to Figures 1, 3 and 4, a steam supply pipeline assembly 6 comprises N steam supply pipelines 61 in parallel, and a steam flow control assembly 7 comprises N electric control valves 71 and M throttling elements 72, wherein M=N-1, and N is an integer greater than or equal to 2; the M throttling elements 72 have different flow rates; each steam supply pipeline 61 is provided with an electric control valve 71, and the M throttling elements 72 are respectively disposed on M of the N steam supply pipelines 61.

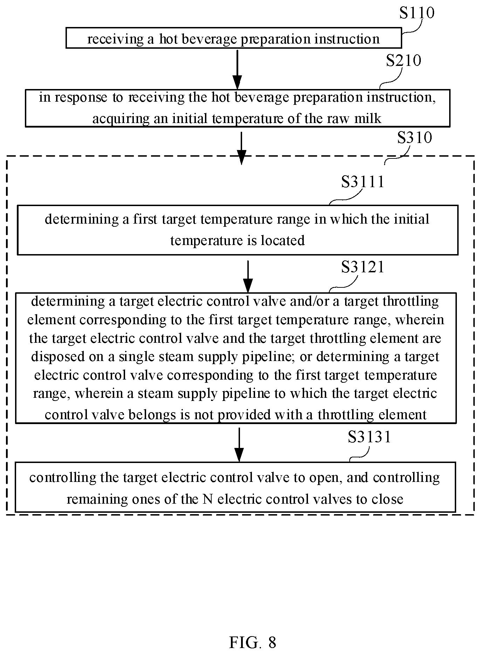

Based on this, referring to Figure 8, a step S310 of, according to an initial temperature, controlling one of at least two steam supply pipelines 61 to supply steam to a mixing container 1 at a target flow rate comprises:
S3111: Determining a first target temperature range in which the initial temperature is located;
S3121: Determining a target electric control valve and a target throttling element corresponding to the first target temperature range, wherein the target electric control valve and the target throttling element are disposed on one steam supply pipeline 61; or determining a target electric control valve corresponding to the first target temperature range, wherein a steam supply pipeline 61 to which the target electric control valve belongs is not provided with a throttling element 72; and
S3131: Controlling the target electric control valve to open, and controlling remaining electric control valves 71 to close.

Specifically, program instructions may comprise multiple first temperature ranges. A number of the first temperature ranges is same as a number of steam supply pipelines 61 and electric control valves 71. One first temperature range corresponds to one steam supply pipeline 61 and an electric control valve 71 on the steam supply pipeline 61. Among the multiple first temperature ranges, a first temperature range in which an initial temperature of raw milk is located is a first target temperature range. An electric control valve 71 on a steam supply pipeline 61 corresponding to the first target temperature range is a target electric control valve. Meanwhile, if a throttling element 72 is also provided on the steam supply pipeline 61, the throttling element 72 is a target throttling element. If a flow rate of the target throttling element is adjustable, the flow rate of the target throttling element can be adjusted to a target flow rate corresponding to a corresponding first temperature range. If the flow rate of the target throttling element is not adjustable, a current flow rate of the target throttling element is a target flow rate. If no throttling element 72 is provided on the steam supply pipeline 61, a flow rate of the steam supply pipeline 61 itself is the target flow rate.

For example, referring to Figure 1, there are two steam supply pipelines 61. There are two electric control valves 71 and one throttling element 72. Program instructions comprise a lowest temperature range and a highest temperature range. When an initial temperature of raw milk is in the lowest temperature range, an electric control valve 71 on a steam supply pipeline 61 not provided with the throttling element 72 is determined as a target electric control valve, the target electric control valve is controlled to open, and other electric control valves 71 are controlled to close, so that the steam supply pipeline 61 can supply steam to a mixing container 1 at a relatively large target flow rate. When the initial temperature of the raw milk is in the highest temperature range, an electric control valve 71 on a steam supply pipeline 61 provided with the throttling element 72 is determined as the target electric control valve, and meanwhile, the throttling element 72 is a target throttling element. The target electric control valve is controlled to open. To reduce costs and simplify control, a flow rate of the throttling element 72 may be set to be non-adjustable, and a fixed flow rate of the throttling element 72 is smaller than a flow rate of the steam supply pipeline 61 itself.

As another example, referring to Figure 3, there are three steam supply pipelines 61, three electric control valves 71, and two throttling elements 72. The two throttling elements 72 have different flow rates and both have non-adjustable flow rates, and fixed flow rates of both throttling elements 72 are smaller than a flow rate of the steam supply pipeline 61 itself.

In this way, a flow of steam entering a mixing container 1 can match an initial temperature of raw milk to appropriately heat the raw milk. This can not only achieve a purpose of regulating a temperature of a beverage output from a beverage machine 100, but also provides higher reliability in adjusting the temperature of the beverage, better meets user needs, and does not reduce a preparation efficiency of the beverage.

In other embodiments of the present application, referring to Figure 4, a steam supply pipeline assembly 6 comprises N steam supply pipelines 61 in parallel, and a steam flow control assembly 7 comprises N electric control valves 71 and N throttling elements 72 respectively disposed on the N steam supply pipelines 61, wherein N is an integer and is greater than or equal to 2; the N throttling elements 72 have different flow rates; a step of, according to an initial temperature, controlling one of at least two steam supply pipelines 61 to supply steam to a mixing container 1 at a target flow rate comprises:
determining a first target temperature range in which the initial temperature is located;
determining a target electric control valve and a target throttling element corresponding to the first target temperature range, wherein the target electric control valve and the target throttling element are disposed on one steam supply pipeline 61; and
controlling the target electric control valve to open and remaining electric control valves 71 to close.

Specifically, referring to Figure 4, there are three steam supply pipelines 61, three electric control valves 71, and three throttling elements 72. The three throttling elements 72 have different flow rates and all have non-adjustable flow rates, and fixed flow rates of the three throttling elements 72 are all smaller than a flow rate of the steam supply pipeline 61 itself.

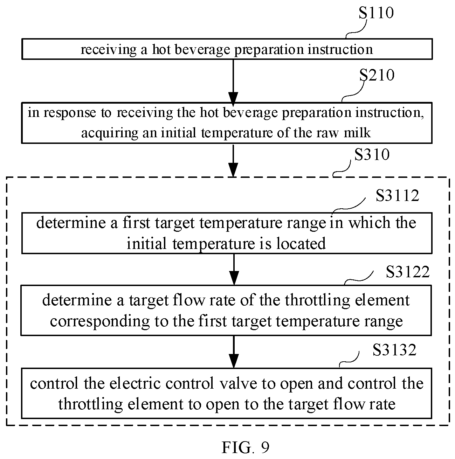

In some embodiments of the present application, referring to Figure 5, a steam supply pipeline assembly 6 comprises the single steam supply pipeline 61, and a steam flow control assembly 7 comprises an electric control valve 71 and a throttling element 72 disposed on the single steam supply pipeline 61. Based on this, referring to Figure 9, a step S310 of, according to an initial temperature, controlling the single steam supply pipeline 61 to supply steam to a mixing container 1 at a target flow rate comprises:
S3112: Determining a first target temperature range in which the initial temperature is located;
S3122: Determining a target flow rate of the throttling element 72 corresponding to the first target temperature range; and
S3132: Controlling the electric control valve 71 to open and controlling the throttling element 72 to open to the target flow rate.

Specifically, a flow rate of the throttling element 72 is adjustable and comprises multiple preset flow rates, and program instructions may comprise multiple first temperature ranges and multiple preset flow rates of the throttling element 72 that correspond one-to-one. A number of the first temperature ranges is same as a number of the preset flow rates of the throttling element 72. One first temperature range corresponds to one preset flow rate of the throttling element 72. A higher a temperature of the first temperature range, a smaller the preset flow rate. Among the multiple first temperature ranges, a first temperature range in which an initial temperature of raw milk is located is a first target temperature range. A preset flow rate of the throttling element 72 corresponding to the first target temperature range is a target flow rate. After determining the target flow rate, an electric control valve 71 on the steam supply pipeline 61 can be controlled to open, and the throttling element 72 can be controlled to open to the target flow rate, so that the steam supply pipeline 61 can provide steam to a mixing container 1 at the target flow rate.

In this way, a flow of steam entering a mixing container 1 can match an initial temperature of raw milk to appropriately heat the raw milk. This can not only achieve a purpose of regulating a temperature of a beverage output from a beverage machine 100, but also provides higher reliability in adjusting the temperature of the beverage, better meets user needs, and does not reduce a preparation efficiency of the beverage.

**Table 1 a target flow rate of the throttling element 72 corresponding to the first target temperature range**

| first target temperature range | target flow rate |
|---|---|
| 0°C-6°C | 1.2mL/s |
| 6°C-15°C | 1mL/s |
| 15°C-25°C | 0.8mL/s |

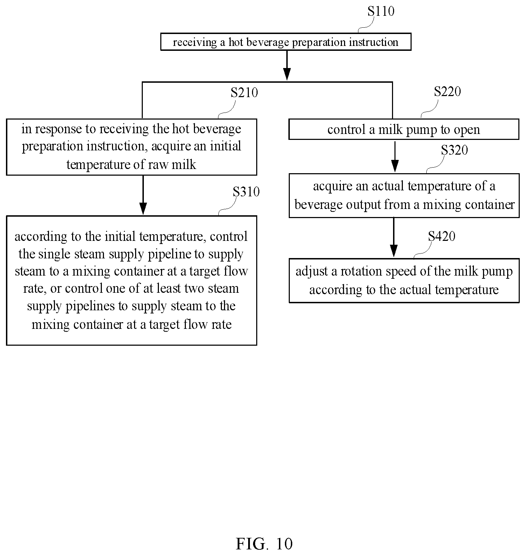

In some embodiments of the present application, after receiving a hot beverage preparation instruction, referring to Figure 10, a control method for a beverage machine 100 further comprises:
S220: Controlling a milk pump 9 to open;
S320: Acquiring an actual temperature of a beverage output from a mixing container 1; and
S420: Adjusting a rotation speed of the milk pump 9 according to the actual temperature.

In this way, a rotation speed of a milk pump 9 can be adjusted based on a temperature of a beverage flowing out from a liquid outlet, and this adjustment method can be used in combination with an above-mentioned adjustment method of adjusting a flow rate of a steam supply pipeline assembly 6 based on an initial temperature of raw milk, which is more beneficial to preparing a beverage with a temperature that meets user needs, with a relatively high preparation efficiency.

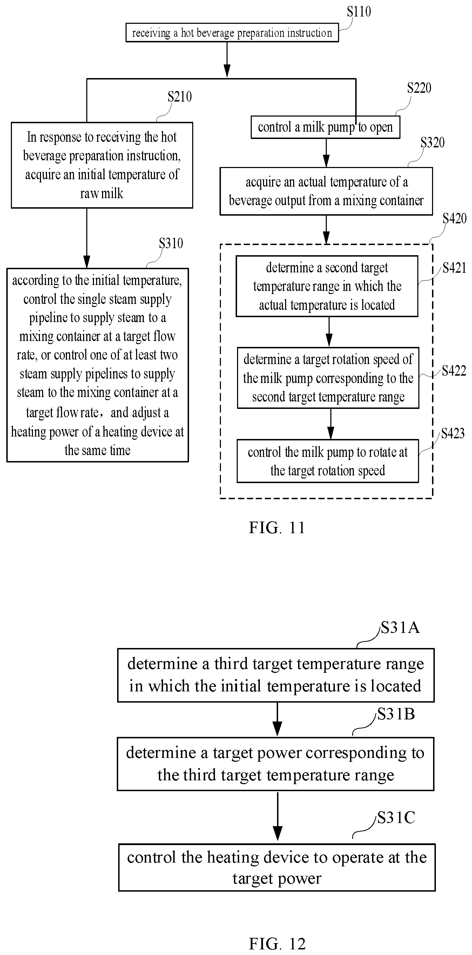

In some specific examples of the present application, referring to Figure 11, a step of adjusting a rotation speed of a milk pump 9 according to an actual temperature comprises:
S421: Determining a second target temperature range in which the actual temperature is located;
S422: Determining a target rotation speed of the milk pump 9 corresponding to the second target temperature range; and
S423: Controlling the milk pump 9 to rotate at the target rotation speed.

Specifically, program instructions may comprise multiple second temperature ranges and multiple preset rotation speeds of a milk pump 9. The multiple preset rotation speeds are different. One second temperature range corresponds to one preset rotation speed. A higher a temperature of the second temperature range, a greater a rotation speed. Among the multiple second temperature ranges, a temperature range in which an actual temperature of a beverage output from a mixing container 1 is located is a second target temperature range. A preset rotation speed corresponding to the second target temperature range is a target rotation speed. After determining the target rotation speed, the milk pump 9 is controlled to rotate at the target rotation speed.

In this way, it is more beneficial to prepare a beverage with a temperature that meets user needs, with a relatively high preparation efficiency.

**Table 2 a target rotation speed of the milk pump 9 corresponding to the second target temperature range**

| second target temperature range | target rotation speed |
|---|---|
| 60°C-65°C | 1500r/min |
| 65°C-70°C | 1700r/min |
| 70°C-75°C | 1900r/min |

In some embodiments of the present application, continuing to refer to Figure 11, while, according to an initial temperature, controlling the single steam supply pipeline 61 to supply steam to a mixing container 1 at a target flow rate, or controlling one of at least two steam supply pipelines 61 to supply steam to the mixing container 1 at a target flow rate, thereby regulating a temperature of a beverage output from a beverage machine 100, a heating power of a heating device 5 is adjusted according to the initial temperature. Specifically, when the initial temperature of raw milk is relatively low, a controller 1F can control the heating power of the heating device 5 to increase, so as to increase a temperature of steam entering the mixing container 1 and improve a heating efficiency of the steam on the raw milk. Conversely, when the initial temperature of the raw milk is relatively high, the controller 1F can control the heating power of the heating device 5 to decrease, so as to reduce the temperature of the steam entering the mixing container 1 and reduce a power consumption of the heating device 5.

In some specific examples, referring to Figure 12, after acquiring an initial temperature of raw milk, specific steps of adjusting a heating power of a heating device 5 according to the initial temperature comprise:
S31A: Determining a third target temperature range in which the initial temperature is located;
S31B: Determining a target power corresponding to the third target temperature range; and
S31C: Controlling the heating device 5 to operate at the target power.

Specifically, program instructions may comprise multiple third temperature ranges and multiple preset powers of a heating device 5. The multiple preset powers are different. One third temperature range corresponds to one preset power. A higher a temperature of the third temperature range, a smaller a preset power. Among the multiple third temperature ranges, a temperature range in which an initial temperature is located is a third target temperature range. A preset power corresponding to the third target temperature range is a target power. After determining the target power, the heating device 5 is controlled to operate at the target power.

In this way, not only can a heating efficiency of steam on raw milk be improved, but also a power consumption of a heating device 5 can be reduced.

**Table 3. a target power corresponding to the third target temperature range**

| third target temperature range | target power |
|---|---|
| 0°C-6°C | 2600W |
| 6°C-15°C | 2400W |
| 15°C-25°C | 2200W |

It can be understood that in various embodiments of the present application, sizes of sequence numbers of various processes do not imply an order of execution. An execution order of various processes should be determined by their functions and internal logic, and should not constitute any limitation on an implementation process of embodiments of the present application.

It can be understood that various embodiments described in the present application can be implemented separately or in combination, and embodiments of the present application are not limited to this.

A person skilled in the art can clearly understand that for convenience and brevity of description, specific working processes of systems, devices, and units described above can refer to corresponding processes in aforementioned method embodiments, and will not be repeated here.

The above are only specific embodiments of the present application, but a protection scope of the present application is not limited to this. Any person skilled in the art can easily conceive of changes or substitutions within a technical scope disclosed in the present application, which should be covered within the protection scope of the present application. Therefore, the protection scope of the present application should be subject to a protection scope of the claims.

## Claims

1. A beverage machine (100), comprising:
a mixing container (1) having a raw milk inlet (11) and a steam inlet (12);
a milk supply pipeline (31) connected to the raw milk inlet (11);
a first temperature detection device (41) configured to detect an initial temperature of raw milk;
a heating device (5) comprising a steam outlet (51);
a steam supply pipeline assembly (6) disposed between the steam outlet (51) and the steam inlet (12),
**characterized in that** the steam supply pipeline assembly (6) comprising a single steam supply pipeline (61) or at least two steam supply pipelines (61); and
the beverage machine (100) further comprises a steam flow control assembly (7) disposed on the steam supply pipeline assembly (6); the steam flow control assembly (7) is configured to perform at least one of controlling opening or closing of the steam supply pipeline assembly (6) and adjusting a steam flow entering the mixing container (1);
wherein the steam flow control assembly (7) is further configured to, based on the initial temperature of the raw milk, control the single steam supply pipeline (61) to supply steam to the mixing container (1) at a target flow rate, or control one of the at least two steam supply pipelines (61) to supply steam to the mixing container (1) at the target flow rate.

2. The beverage machine (100) according to claim 1, wherein the beverage machine (100) further comprises a controller (1F); the controller (1F) is electrically connected to the steam flow control assembly (7) and the first temperature detection device (41) respectively, and the controller (1F) is configured to control the steam flow control assembly (7) according to the initial temperature of the raw milk.

3. The beverage machine (100) according to claim 2, wherein the steam supply pipeline assembly (6) comprises:
N steam supply pipelines (61) in parallel, wherein the N steam supply pipelines (61) in parallel are disposed between the steam outlet (51) and the steam inlet (12);
the steam flow control assembly (7) comprises N electric control valves (71) and at least one throttling element (72), wherein each of the N steam supply pipelines (61) is provided with one of the N electric control valves (71), and the at least one throttling element (72) is disposed on at least one of the N steam supply pipelines (61), wherein N is an integer and is greater than or equal to 2; and
the controller (1F) is electrically connected to the N electric control valves (71), and the controller (1F) is configured to control opening and closing of the N electric control valves (71) according to the initial temperature of the raw milk.

4. The beverage machine (100) according to claim 3, wherein the at least one throttling element (72) comprises M throttling elements (72), wherein M=N-1;
when M is 1, the throttling element (72) is disposed on one of the N steam supply pipelines (61);
when M is greater than 1, the M throttling elements (72) are respectively disposed on M of the N steam supply pipelines (61), and the throttling elements (72) on different ones of the N steam supply pipelines (61) have different flow rates; and
the controller (1F) is configured to, according to the initial temperature of the raw milk, control one of the N electric control valves (71) to open and control remaining ones of the N electric control valves (71) to close.

5. The beverage machine (100) according to claim 3, wherein the at least one throttling element (72) comprises N throttling elements (72), each of the N steam supply pipelines (61) is provided with one of the N throttling elements (72), and different ones of the N throttling elements (72) have different flow rates; and
the controller (1F) is configured to, according to the initial temperature of the raw milk, control one of the N electric control valves (71) to open and control remaining ones of the N electric control valves (71) to close.

6. The beverage machine (100) according to any one of claims 3-5, wherein the steam inlet (12) is a single one, and the N steam supply pipelines (61) all communicate with the mixing container (1) through the steam inlet (12);
or the beverage machine (100) further comprises a multi-way fitting (81) and a common pipeline (82); one end of the common pipeline (82) is connected to the steam inlet (12), and another end of the common pipeline (82) is respectively connected to the N steam supply pipelines (61) through the multi-way fitting (81);
or the beverage machine (100) further comprises a check valve (821); the check valve (821) is disposed on the common pipeline (82), and the check valve (821) allows unidirectional conduction from the multi-way fitting (81) to the steam inlet (12).

7. The beverage machine (100) according to claim 2, wherein the steam supply pipeline assembly (6) is a single steam supply pipeline (61);
wherein the steam flow control assembly (7) comprises a throttling element (72) disposed on the steam supply pipeline (61), and the throttling element (72) is configured to have an adjustable flow rate; and
the controller (1F) is electrically connected to the throttling element (72), and the controller (1F) is configured to adjust a flow rate of the throttling element (72) according to the initial temperature of the raw milk;
the steam flow control assembly (7) further comprises an electric control valve (71) disposed on the steam supply pipeline (61); wherein the controller (1F) is electrically connected to the electric control valve (71), and the controller (1F) is further configured to control opening or closing of the electric control valve (71).

8. The beverage machine (100) according to claim 2, wherein the steam supply pipeline assembly (6) is the single steam supply pipeline (61), and the single steam supply pipeline (61) is disposed between the steam outlet (51) and the steam inlet (12);
wherein the steam flow control assembly (7) comprises an electric control valve (71) disposed on the single steam supply pipeline (61);
wherein the single steam supply pipeline (61) is further provided with a check valve (821); the check valve (821) is disposed downstream of the electric control valve (71), and the check valve (821) allows unidirectional conduction from the steam outlet (51) to the steam inlet (12); and
wherein the controller (1F) is electrically connected to the electric control valve (71), and the controller (1F) is configured to control opening or closing of the electric control valve (71).

9. The beverage machine (100) according to any one of claims 2-5, wherein the mixing container (1) comprises a liquid outlet (13);
the beverage machine (100) further comprising:
a second temperature detection device (42) disposed at least one of at the liquid outlet (13) and on a downstream pipeline of the liquid outlet (13), the second temperature detection device (42) being configured to detect an actual temperature of a beverage output from the mixing container (1); and
a milk pump (9) disposed on the milk supply pipeline (31);
wherein the controller (1F) is electrically connected to the milk pump (9) and the second temperature detection device (42) respectively, and the controller (1F) is configured to adjust a rotation speed of the milk pump (9) according to the actual temperature of the beverage output from the mixing container (1).

10. The beverage machine (100) according to any one of claims 2-5, wherein the controller (1F) is electrically connected to the heating device (5), and the controller (1F) is configured to adjust a heating power of the heating device (5) according to the initial temperature of the raw milk.

11. A control method for a beverage machine (100), wherein the beverage machine (100) comprises a mixing container (1), a milk supply pipeline (31), and a steam supply pipeline assembly (6); the milk supply pipeline (31) is configured to transport raw milk to the mixing container (1) to prepare a beverage; the steam supply pipeline assembly (6) is configured to transport steam to the mixing container (1); **characterized in that** the steam supply pipeline assembly (6) comprises a single steam supply pipeline (61) or at least two steam supply pipelines (61); the control method comprising:
receiving a hot beverage preparation instruction;
in response to receiving the hot beverage preparation instruction, acquiring an initial temperature of the raw milk; and
according to the initial temperature, controlling the single steam supply pipeline (61) to supply steam to the mixing container (1) at a target flow rate, or controlling one of the at least two steam supply pipelines (61) to supply steam to the mixing container (1) at the target flow rate, thereby regulating a temperature of a beverage output from the beverage machine (100).

12. The control method for the beverage machine (100) according to claim 11, wherein the steam supply pipeline assembly (6) comprises N steam supply pipelines (61) in parallel, and a steam flow control assembly comprises N electric control valves (71) and M throttling elements (72), wherein M=N-1, and N is an integer greater than or equal to 2; the M throttling elements (72) have different flow rates; each of the N steam supply pipelines (61) is provided with one of the N electric control valves (71), and the M throttling elements (72) are respectively disposed on M of the N steam supply pipelines (61); wherein the step of, according to the initial temperature, controlling one of the at least two steam supply pipelines (61) to supply steam to the mixing container (1) at the target flow rate comprises:
determining a first target temperature range in which the initial temperature is located;
determining a target electric control valve and a target throttling element corresponding to the first target temperature range, wherein the target electric control valve and the target throttling element are disposed on one steam supply pipeline (61); or determining a target electric control valve corresponding to the first target temperature range, wherein a steam supply pipeline (61) to which the target electric control valve (71) belongs is not provided with a throttling element (72); and
controlling the target electric control valve to open, and controlling remaining ones of the N electric control valves (71) to close.

13. The control method for the beverage machine (100) according to claim 11, wherein
the steam supply pipeline assembly (6) comprises N steam supply pipelines (61) in parallel, and a steam flow control assembly comprises N electric control valves (71) and N throttling elements (72) respectively disposed on the N steam supply pipelines (61), wherein N is an integer and is greater than or equal to 2; the N throttling elements (72) have different flow rates; wherein the step of, according to the initial temperature, controlling one of the at least two steam supply pipelines (61) to supply steam to the mixing container (1) at the target flow rate comprises:
determining a first target temperature range in which the initial temperature is located;
determining a target electric control valve and a target throttling element corresponding to the first target temperature range, wherein the target electric control valve and the target throttling element are disposed on one steam supply pipeline (61); and
controlling the target electric control valve to open and controlling remaining ones of the N electric control valves (71) to close.

14. The control method for the beverage machine (100) according to claim 11, wherein
the steam supply pipeline assembly (6) comprises a single steam supply pipeline (61), and the steam flow control assembly comprises an electric control valve (71) and a throttling element (72) disposed on the single steam supply pipeline (61); wherein the step of, according to the initial temperature, controlling the single steam supply pipeline (61) to supply steam to the mixing container (1) at a target flow rate comprises:
determining a first target temperature range in which the initial temperature is located;
determining a target flow rate of the throttling element (72) corresponding to the first target temperature range; and
controlling the electric control valve (71) to open and controlling the throttling element (72) to open to the target flow rate.

15. The control method for the beverage machine (100) according to any one of claims 11-14, wherein the milk supply pipeline (31) is provided with a milk pump (9), and after receiving the hot beverage preparation instruction, the control method further comprises:
controlling the milk pump (9) to open;
acquiring an actual temperature of a beverage output from the mixing container (1); and
adjusting a rotation speed of the milk pump (9) according to the actual temperature.
